# EUROPEAN PATENT SPECIFICATION

(11) **EP 0 439 305 B1**
(45) Date of publication and mention of the grant of the patent: **10.07.1996**
(21) Application number: 91300429.7
(22) Date of filing: 18.01.1991
(51) Int. Cl.: G05B 19/18, G05B 19/41

(54) **Methods of generating data for numerically controlled machine tools**
Verfahren zum Generieren von Daten für numerisch gesteuerte Werkzeugmaschinen
Méthode de génération de données pour machine outils à commande numérique

(30) Priority: 21.01.1990 JP 10871/90
(43) Date of publication of application: 31.07.1991
(73) Proprietor: SONY CORPORATION, Tokyo 141 (JP)
(72) Inventor: Sawamura, Jun, Patents Division, Shinagawa-ku Tokyo 141 (JP); Kuragano, Tetsuzo, Patents Division, Shinagawa-ku Tokyo 141 (JP)
(74) Representative: Harris, Ian Richard

(56) References cited:
- EP-A- 0 359 378
- US-A- 4 707 793
- US-A- 4 819 192

## Description

This invention relates to methods of generating data for numerically controlled machine tools. Such methods can, for example, be used for generating offset surface data particularly applicable in designing and manufacturing contoured products utilizing data representing a free surface generated through computer aided design (CAD) and/or computer aided manufacturing (CAM).

Where the contour of an object defined by a free surface is designed using a CAD technique (so called, geometric modelling), the designer generally specifies a plurality of points (articulation points) in a three dimensional coordinate system, through which the surface is to pass, and uses a computer to calculate a boundary line network interconnecting the plurality of specific articulated points on the basis of desired vector functions. A surface represented by a "wire frame" is thus generated. In this way, a multiple number of frame spaces enclosed with boundary lines can be formed. Such a process is called frame processing.

The boundary line network formed by such frame processing represents a rough sketch to be designed by the designer. If a surface which can be represented by determined vector functions using boundary lines enclosing each frame space can be interpolated, the free space desired by the designer (which is impossible to specify by means of a quadratic function) can, as a whole, be generated.

The surface extending over each framed space forms a basic element constituting the whole surface and is called a "patch".

To provide a more natural outer contour for the entire generated free surface, a free surface generating method has been proposed in which a control side vector around a common boundary is set again, so as to extend a patch to satisfy the condition of continuity of the osculating planes at the common boundary bridging the two frame spaces.

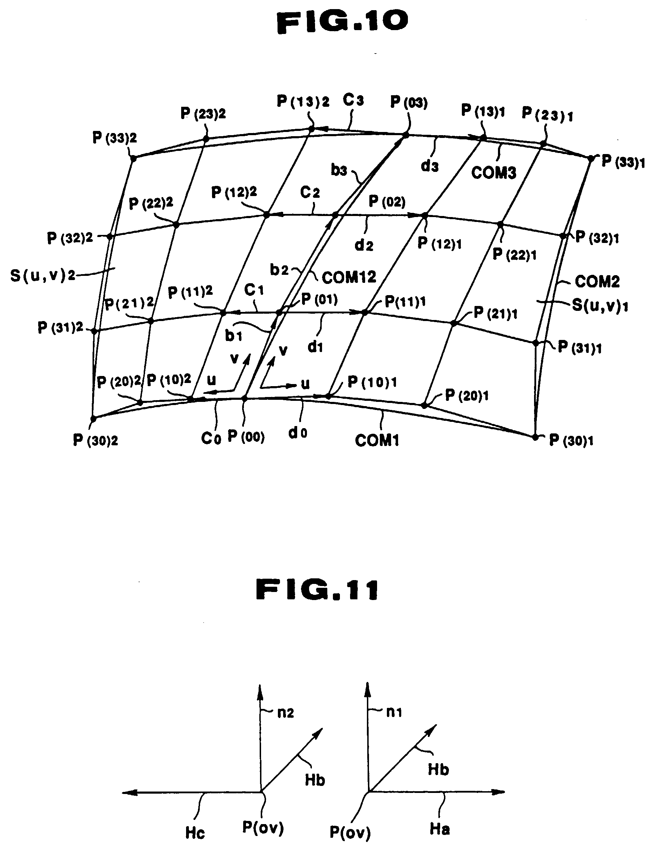

US patent specification US-A-4 819 192 exemplifies the above free surface generating method, which will be described with reference to Figures 10 and 11.

In the case where two patches S(u, v)₁ and S(u, v)₂ are smoothly connected to each other, for example, as shown in Figure 10, control side vectors a₁, a₂, c₁ and c₂ to establish a condition of continuity of the osculating planes are, in principle, set on a common boundary COM 12 bridging the adjoining patches S(u, v)₁ and S(u, v)₂ on the basis of articulated points P(00), P(30)₁, P(33)₁, P(03), P(33)₂ and P(30)₂ derived by frame processing internal control points P(11)₁, P(12)₁, P(11)₂ and P(12)₂ which are set once again by means of these control side vectors.

If the above-described technique is applied to other common boundaries, the two patches S(u, v)₁ and S(u, v)₂ can be smoothly connected to other adjoining patches with the continuity of the osculating planes. It is noted that "osculating plane" means a plane formed by tangent vectors in the u and v directions at each point of the common boundary. For example, when at each point on the common boundary COM 12 of Figure 10, the osculating planes of the patches S(u, v)₁ and S(u, v)₂ are the same, the condition of continuity of the "osculating planes" is established.

In detail, the condition of continuity of the osculating planes at a point (o, v), wherein u = o and v = v, on the common boundary COM 12, is determined as shown in Figure 10. That is to say, for the one patch S(u, v)₁ a normal vector n₁ for a tangent vector Ha in a direction travelling along the common boundary COM 12 (that is, the u direction) and a tangent vector Hb in a direction along the common boundary COM 12 (that is, the v direction) can be expressed in the following equation:${\text{n}}_{\text{1}} \text{= Ha x Hb}$

In addition, for the other patch S(u, v)₂ a normal vector n₂ for a tangent vector Hc in a direction traversing the common boundary COM 12 and a tangent vector Hb in a direction along the common boundary COM 12 can be expressed in the following equation:${\text{n}}_{\text{2}} \text{= Hb x Hc}$

Since the two sets of tangent vectors Ha, Hb and Hc must be present on the same plane to establish the condition of continuity of the osculating plane under a condition as described above, the two normal vectors n₁ and n₂ are consequently directed in the same sense.

To achieve this condition for the two normal vectors n₁ and n₂, the internal control points P(11)₁, P(21)₁, P(12)₁, P(22)₁ and P(11)₂, P(21)₂, P(12)₂, P(22)₂ may be set so as to establish the following equation:$\text{λ(v)} \frac{\text{δ S} {\left(\text{u, v}\right)}_{\text{2}}}{\text{δu}} \text{= µ(v). µ} \frac{\text{δ S} {\left(\text{u, v}\right)}_{\text{1}}}{\text{δu}} \text{+} \text{ν(v)} \frac{\text{δ S} {\left(\text{u, v}\right)}_{\text{1}}}{\text{δv}}$

In the equation (3), λ(v), µ(v) and ν(v) denote scalars.

Furthermore, the patches S(u, v)₁ and S(u, v)₂ are represented using a vector function S(u, v) of a cubic Bezier operation:${\text{S(u, v) = (1 - u + uE)}}^{\text{3}} {\text{. (1 - v + vF)}}^{\text{3}} {\text{. P}}_{\text{(oo)}}$

It is noted that u and v denote parameters in the u direction and in the v direction, and E and F denote shift operators.

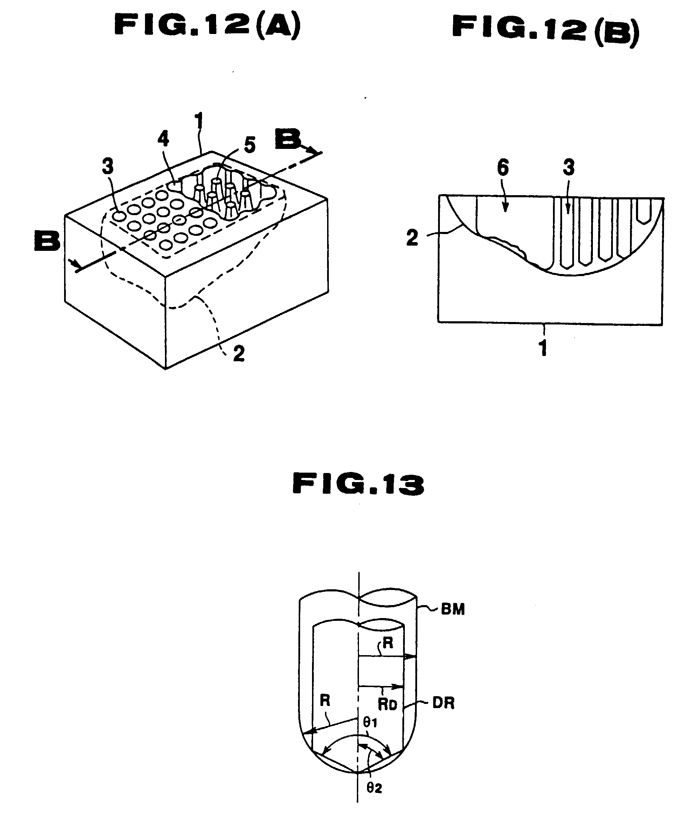

In practical production, an article defined by a plurality of patches S(u, v), S(u, v)₁, S(u, v)₂... is formed by utilizing a female or reversed configuration die. For this, such a female or reversed configuration die has to be prepared. Such a female die is made from a rectangular parallelepiped configuration of a material block. The material block 1 (Figure 12(A)) is drilled to remove extra material to form a plurality of straight bores 3 respectively having depths substantially corresponding to the depths of the die recess at the corresponding position according to the desired configuration of the curved surface 2, as shown in Figure 12(A). Subsequently, the remaining materials 4 and 5 are removed by means of a ball end mill to form the recess 6 (Figure 12(B)). Such a machining process may require approximately 70% of the process period for producing the female die. The process illustrated herein successfully reduces the process time for the aforementioned rough machining. Therefore, with the shown process, the efficiency in production of the female die can be significantly improved.

Here, as shown in Figure 13, the radius R_{D} and the curve radius R of a drill DR and ball end mill BM are diametrically selected to satisfy the following equation:${\text{R}}_{\text{D}} \text{= 0.8R}$

The drill DR is provided with a working edge angle θ₁(= 2θ₂) at the working edge and the ball end mill has a substantially hemispherical head. By means of the drill DR and the ball end mill BM, the machining processes are performed utilizing identical machining data which define the path of the tools.

The machining data for defining the path of the tool for machining a free or random surface is determined in the process disclosed in US patent specification US-A-4 789 931.

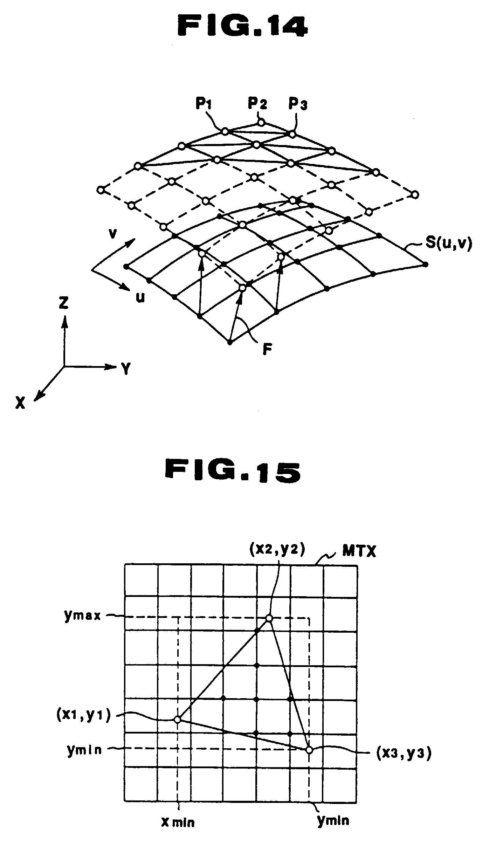

Namely, as shown in Figure 14, among all of patches defining the free or random surface 2 of the female die, a randomly selected patch S(u, v) is separated into a predetermined number of segments. In the example of Figure 14, the patch S(u, v) is separated or divided into sixteen segments by dividing it into four segments in the respective u and v directions. The, the parameters are thus divided into the u and v directions. Tangent vectors n at the respective grid points are obtained (for example, see Figure 11). Thereafter, the offset vector F at each grid point is derived on the basis of the tangent vector n and the curve radius R of the ball end mill. The magnitude of the offset vector F can be expressed by the equation:$\text{F = Rn}$

Then, offset points P₁, P₂, P₃... are derived from the offset vector thus derived. By connecting three mutually adjacent offset points, a triangular plane P₁-P₂-P₃ is established. By this, an offset surface defined by a plurality of triangular planes can be defined.

For generating free or random surface machining data, machining point matrix MTX is set on a two-dimensional X-Y plane. The matrix MTX covers all surface configurations and is formed by a plurality of machining points separated by a pitch determined on the basis of the radius R_{D} of the drill DR and the curve radius R of the ball end mill BM. In the X-Y coordinate system of the X-Y plane, respective ones of the machining points can be defined by the x and y coordinates (xᵢⱼ, yᵢⱼ).

Subsequently, with respect to the triangular plane projected on the matrix MTX and defined by the coordinates (x₁, y₁), (x₂, y₂) and (x₃, y₃), regions defined by (xₘᵢₙ, xₘₐₓ) and yₘᵢₙ yₘₐₓ), in which machining points (xᵢⱼ uᵢⱼ) to determine the machining data are present, as shown in Figure 15. Then, with respect to each machining point, a determination is made of whether it is within the projection of the triangular plane on the matrix MTX. For the machining points oriented within the projection of the triangular plane as identified by solid dots in Figure 15, the height zᵢⱼ is derived by equation (6). The height zᵢⱼ thus derived represents the offset magnitude at the corresponding machining point. By repeating the foregoing process for all of the machining points and for all of the triangular planes, machining data are derived including orientation (xᵢⱼ, yᵢⱼ) of the machining point with height data zᵢⱼ. Therefore, each grid point on the matrix MTX can be defined. Such machining data are suitable for rough machining by means of a drill and ball end mill.

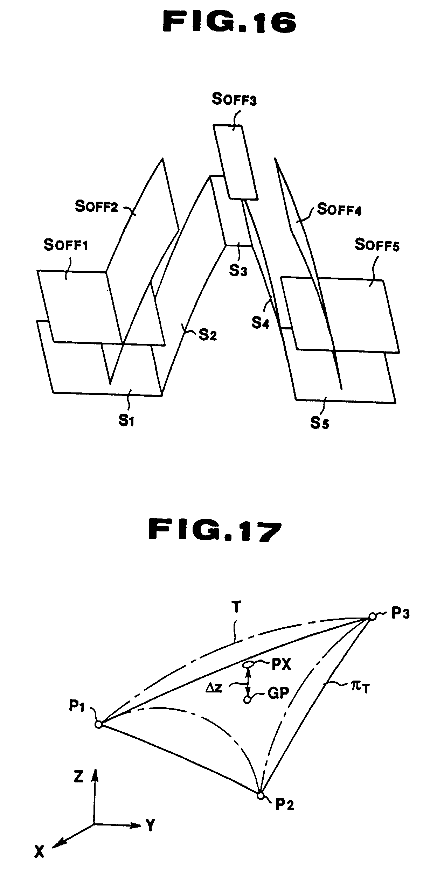

The foregoing process is successful for deriving machining data as long as the adjacent offset planes form a continuous surface. However, in the case that the surface to be machined has a discontinuity such as that shown in Figure 16, difficulty is encountered in generating the machining data. For instance, in the example of Figure 16, if the random surface to be machined is formed by the patches S₁, S₂, S₃, S₄, S₅..., the offset planes S_{off1}, S_{off2}, S_{off3}, S_{off4}, S_{off5}..., become discontinuous. As can be seen, in the shown example, the offset planes S_{off2}, S_{off3} and S_{off3}, S_{off4} of the surfaces S₂, S₃ and S₃, S₄ form a discontinuous surface to make it impossible to form grid points.

For solving this problem, our US patent specification US-A-4 866 631 proposes a process which enables the generation of offset surface when a discontinuity of the offset surfaces is established with respect to the surface to be machined.

Although the process proposed in US-A-4 866 631 is successful in generating the offset surface despite the presence of discontinuity, a large amount of arithmetic data processing is required. Therefore, when the surface to be machined consists of complex configurations and thus has a large number of patches, the process time becomes substantial. Furthermore, in the proposed process, the triangular planes forming the offset planes are formed by dividing parameters into a predetermined number which is fixed irrespective of the size of the patch. Therefore, as shown in Figure 17, greater error between the offset surface T and the approximated triangular plane _{T}(P₁ - P₂ - P₃) can be induced for a greater patch. As a result, the grid points GP formed on the triangular plane _{T} tend to be oriented at lower elevations than the point Px on the surface to be machined in a magnitude Z. Therefore, the problem of excessive machining can arise.

Furthermore, determining whether the grid points are oriented within or out of the triangular project prolongs the process time.

According to the present invention there is provided a method of generating data defining the machining depth along a tool path for a numerically controlled machine of the type having a machining tool of a known configuration, using data defining a three-dimensionally curved surface, the method comprising the steps of:
(a) dividing the three-dimensionally curved surface into a plurality of patches;
(b) then sub-dividing each of the patches to establish a plurality of grid points;
(c) comparing the distance between adjacent grid points with a given value which is derived in relation to the size of the machining tool; and
(d) repeating steps (b) and (c) when the distance as compared at step (c) is greater than the given value;
(e) then selecting patches located in a section area of the machining tool; and
(f) selecting the grid points of the patches determined in step (e) which are inside of the section area of the machining tool;
(g) then calculating for each selected grid point the maximum height of the centre of the machining tool for the machining tool to contact said selected grid point; and
(h) adding a predetermined correction value to the maximum height for determining the height position of machining tool in the tool path.

Thus embodiments of the present invention can provide methods of generating rough depth machining data based on the free surface data without using an offset surface, and for generating rough depth machining data while successfully avoiding excess machining.

Such a method for generating data defining the machining depth of a tool path for a numerically controlled machine, may comprise generating machining tool path depth data without establishing offset plane data so that the machining tool path depth data can be established for discontinuous, surfaced, offset planes which might otherwise cause interference in the tool path. The method may include the steps of forming a plurality of patches defining a three-dimensional plane to be machined and dividing each patch into a predetermined number of segments as divided by a plurality of grid points. The number of segments is variable depending upon the distance between adjacent grid points so that the distance is maintained to be smaller than the machining area of a machine tool. The machining depth at respective ones of the grid points is then derived with respect to the maximum height position at which the machining tool comes into contact with the grid point. The machining depth is then modified with a correction value which is determined in terms of the surface condition of the surface to be machined.

The invention will now be described by way of example with reference to the accompanying drawings, throughout which like parts are referred to by like references, and in which:
Figure 1 is a block diagram of CAD/CAM system employing the preferred embodiment of a machining data generating method according to the present invention.
Figure 2 is a flowchart showing a preferred process of machining data generation;
Figures 3 to 10 are illustrations used for explaining the respective processes at respective steps in the process of Figure 2;
Figure 10 is an explanatory illustration showing the connection between adjacent patches in a previously proposed method;
Figure 11 is an explanatory illustration for explaining continuity of surfaces in a previously proposed method;
Figures 12 to 15 are explanatory illustrations showing a previously proposed manner of generation of machining data;
Figure 16 is an explanatory illustration showing a previously proposed example of a surface configuration having discontinuous offset surfaces; and
Figure 17 is an explanatory illustration of how error in the generation of the machining data can occur in the previously proposed method.

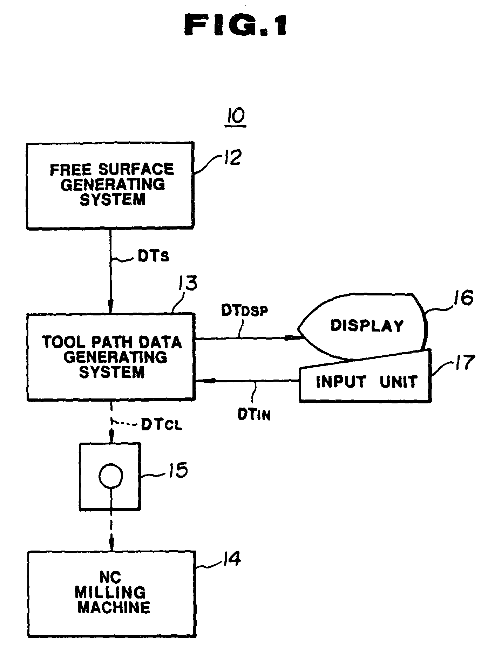

Referring now to the drawings, particularly to Figure 1, the preferred embodiment of machining data generating method, according to the present invention, is applicable for a CAD/CAM system 10 as illustrated. The CAD/CAM system 10 includes a free or random surface generating system 12, a tool path data generating system 13 and a numerically controlled (NC) milling machine (machining centre) 14. Respective of the free or random surface generating system 12, the machining data generating system 13 and the milling machine 14 are each provided with their own CPUs.

The free surface generating system 12 generates the outer surface data DTₛ of a desired configuration of the article, which outer surface is defined by a plurality of interconnected quadrilateral patches S(u, v). For generating the outer surface data DTₛ, CAD technology may be used. The tool path data generating system 13 receives the outer surface data DTₛ from the free surface data generating system 12. Based on the received outer surface data DTₛ, the tool path data generating system 13 generates machining data for rough machining by means of a drill DR and a ball end mill BM. Then, the machining data generating system 13 generates tool path data DT_{CL} on the basis of the machining data.

The tool path data DT_{CL} is supplied through an appropriate medium, such as a floppy disc, on-line network and so forth, to the milling machine 14 while the drill DR and the ball end mill BM are driven through the tool path defined by the tool path data DT_{CL} to perform rough machining. By the process set forth above, a female die 1 (see Figures 12(A) and 12(B)) for production of the desired outer surface configuration can be rough machined.

It should be appreciated that the tool path data generating system 13 is associated with a display unit 16 and an input unit 17 which comprises a keyboard, mouse and so forth. For example, the designer or engineer can enter operation data through the input unit 17 while visually observing a menu or displaced graphic image and so forth on the display unit 16. Based on the entered operation data and the machining data derived on the basis of the outer surface data DTₛ from the outer surface data generating system 12, the tool path data are derived.

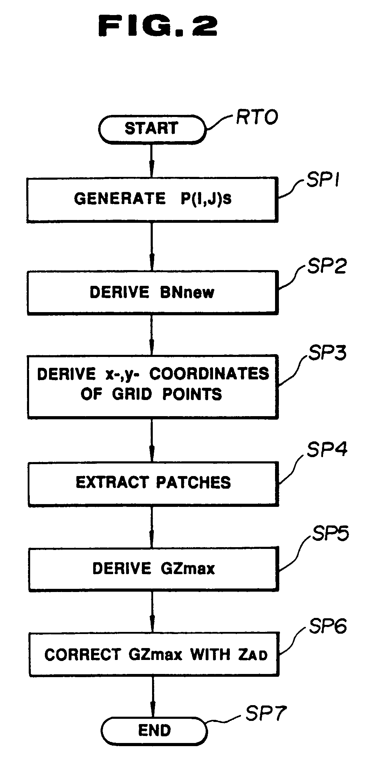

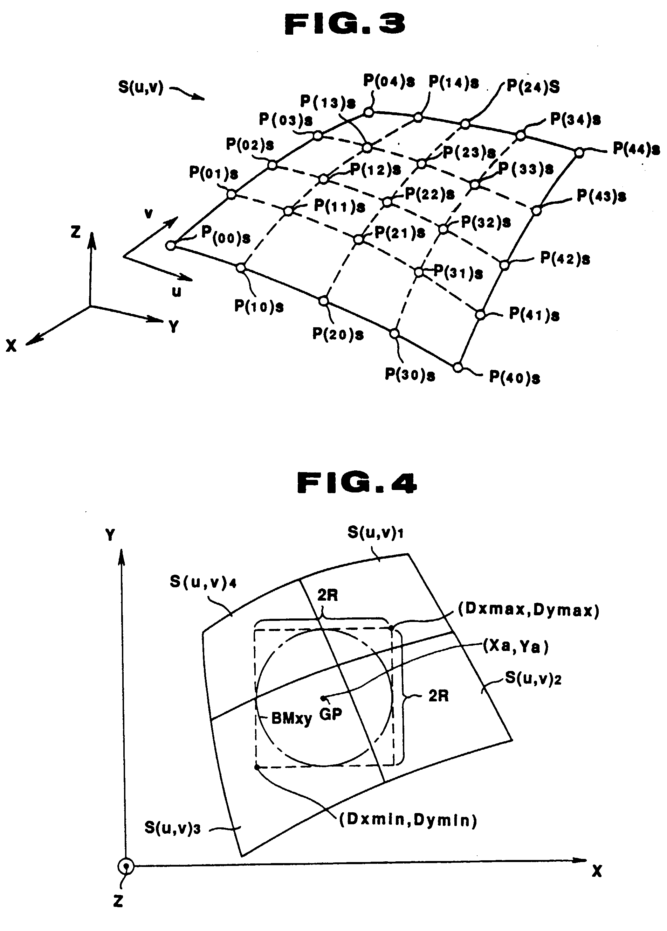

The CPU in the tool path data generating system 13 is responsive to a command entered through the input unit 17 for generating the tool outer surface data DTₛ. The process of deriving the tool path data DT_{CL} is illustrated in Figure 2. This process begins execution at a step RTO. Subsequently, at a step SP₁, free surface data DTₛ defined by a plurality of patches S(u, v) and representing the free surface to be machined are read out from the free surface data generating system 12. Subsequently, at the step SP₁, parameters defining each patch S(u, v) in the free surface data DTₛ are divided into a predetermined number BN in order to establish a plurality of segments in each patch. Through this process, each patch is defined by a plurality of grid point data, as shown in Figure 3. In the example shown in Figure 3, the parameters defining each patch are divided by four in u and v directions to produce sixteen segments. Therefore, in the shown example, the patch is defined by twenty-five grid points P₍₀₀₎ₛ - P₍₀₄₎ₛ, P₍₁₀₎ₛ - P₍₁₄₎ₛ, P₍₂₀₎ₛ - P₍₂₄₎ₛ, P₍₃₀₎ₛ - P₍₃₄₎ₛ and P₍₄₀₎ₛ - P₍₄₄₎ₛ. These grid points as generally referred to will be hereinafter represented by P_{(i j)s}, i, j = 0, 1, 2, 3, 4.

At a step SP₂, the distance between adjacent grid points is derived. In the process of step SP₂, for grid point P_{(i j)s}, the distance in the x-coordinate component (distance in a projection on the X-Z plane of the coordinate system), the y-coordinate component (distances in projections on the X-Y plane and the Y-Z planes of the coordinate system), and the z-coordinate component (distances in projections on the X-Z and the Y-Z planes) to grid points P_{(i+1 j)s}, P_{(i j+1)s}, P_{(i+1 j+1)s} are derived. Subsequently, from the result of the foregoing process of derivation of the distances between the adjacent grid points, maximum values X_{dis}, Y_{dis}, Z_{dis} are derived. These maximum values X_{dis}, Y_{dis}, Z_{dis} are compared with a predetermined criterion R_{ref}. This can be expressed by:${\text{X}}_{\text{dis}} {\text{> R}}_{\text{ref}}$${\text{Y}}_{\text{dis}} {\text{> R}}_{\text{ref}}$${\text{Z}}_{\text{dis}} {\text{> R}}_{\text{ref}}$ Therefore, a check is performed whether one of equations (7), (8) and (9) is satisfied. The predetermined criterion R_{ref} is determined in relation to the radius R of the ball end mill CM so that the value of the predetermined criterion is smaller than or equal to the radius of the ball end mill. When one of the foregoing equations (7), (8) and (9) is satisfied, an arithmetic process is executed to determine a new dividing number BM_{new} so that the maximum values X_{dis}, Y_{dis} and Z_{dis} become smaller than the predetermined criterion R_{ref}. In practice, the new dividing number is derived through the following equation:${\text{BM}}_{\text{new}} {\text{= (INT[D}}_{\text{xyz}} {\text{/R}}_{\text{ref}} \text{]+1) x BN}$ where D_{xyz} is respective ones of the maximum values X_{dis}, Y_{dis} and Z_{dis} of the x, y and z-coordinate components; and
INT [ ] is an operator for deriving the integer of the value in the parenthesis.
The foregoing process is performed for the patches having the maximum distances, one of which satisfies the foregoing equations (7), (8) and (9). Through the foregoing process, the patches having greater maximum distances X_{dis}, Y_{dis} and Z_{dis} than the predetermined criterion R_{ref} can be separated into smaller segments.

Furthermore, the maximum and minimum values Xₘₐₓ, Yₘₐₓ, Zₘₐₓ and Xₘᵢₙ, Yₘᵢₙ, Zₘᵢₙ of x, y and z-coordinate components are derived. Subsequently, in a manner similar to that illustrated with respect to Figure 15, the x and y-coordinates of the respective grid points GP with patches corresponding to the radius R of the drill DR and the curve radius RD of the ball end mill BM are set with respect to the overall area of the projection of the free surface projected on the X-Y plane, at a step SP3. As previously explained in reference to the grid points set in the previously proposed process, the respective grid points are identified by x and y-coordinates on the x-y coordinate system established on the X-Y plane, and the combination of the grid points defines the free surface projection on the X-Y plane.

At a step SP₄, as shown in Figure 4, with respect to each of the grid points, a projection of the ball end mill BM on the X-Y plane centring at each grid point GP is established. Then, patches S_{(u, v)} oriented with an area BM_{xy} of the projection of the ball end mill are extracted. In order to make a judgement whether the patches are oriented within or outside of the projection area BM_{xy}, a square region having an edge length corresponding to the diameter (2R) of the ball end mill, which is defined by the x and y-coordinates of Dₓₘᵢₙ, Dₓₘₐₓ, D_{ymin} and D_{ymax}, is established. Then, these coordinate data Dₓₘᵢₙ, Dₓₘₐₓ, D_{ymin} and D_{ymax} of the square are compared with the maximum and minimum coordinate values Xₘₐₓ, Xₘᵢₙ, Yₘₐₓ, Yₘᵢₙ, Zₘₐₓ and Zₘᵢₙ to check whether the following equations are satisfied:${\text{X}}_{\text{max}} {\text{≥ D}}_{\text{xmin}}$${\text{X}}_{\text{min}} {\text{≤ D}}_{\text{xmax}}$${\text{Y}}_{\text{max}} {\text{≥ D}}_{\text{ymax}}$${\text{Y}}_{\text{min}} {\text{≤ D}}_{\text{ymax}}$${\text{Z}}_{\text{max}} {\text{+ R > GZ}}_{\text{max}}$ wherein GZₘₐₓ represents the z-coordinate value of the grid point GP, which is set at a minimum value Zₘᵢₙ of overall z-coordinate components on the free surface.

When all conditions set in the foregoing equations (11), (12), (13), (14) and (15) are satisfied, a judgement can be made as to whether a given patch S(u, v) is oriented within the projection area BM_{xy}. At the process of the step SP₄, all patches oriented within the projection area can be extracted. In the example of Figure 4, four patches S(u, v)₁ to S(u, v)₄ are extracted with respect to the grid point GP at which the ball end mill BM is centred . When another patch is oriented beneath the extracted patch, such patch may not be extracted because of a smaller maximum z-coordinate component Zₘₐₓ than that of the extracted patches. In this way, unnecessary interference with the tool patch can be successfully avoided.

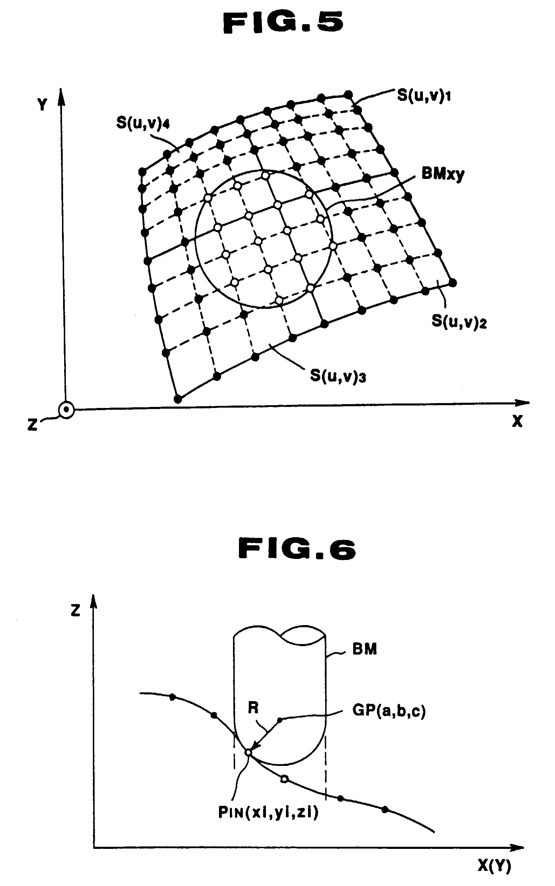

At a step SP₅, a further judgement is performed whether the points P₍ᵢⱼ₎ₛ₁, P₍ᵢⱼ₎ₛ₂, P₍ᵢⱼ₎ₛ₃ and P₍ᵢⱼ₎ₛ₄ on the extracted patches S(u, v)₁ to S(u, v)₄ are within a circular projection BM_{xy} (centred at the grid point GP) of the ball end mill BM. In practice, a judgement whether the points P₍ᵢⱼ₎ₛ₁, P₍ᵢⱼ₎ₛ₂, P₍ᵢⱼ₎ₛ₃ and P₍ᵢⱼ₎ₛ₄ are out of or within the circular projection area is performed by the following process. For the respective points P₍ᵢⱼ₎ₛ₁, P₍ᵢⱼ₎ₛ₂, P₍ᵢⱼ₎ₛ₃ and P₍ᵢⱼ₎ₛ₄, the x and y-coordinate component data are derived as xᵢ and yᵢ. Subsequently, the x and y-coordinate component data of the associated grid point GP of the centre of the ball end mill BM are set as xₐ and yₐ. Then, a circular area is calculated and compared with the radius R of the ball end mill BM by the following equation:${\text{(x}}_{\text{i}} {\text{- x}}_{\text{a}} {\text{)}}^{\text{2}} {\text{+ (y}}_{\text{i}} {\text{- y}}_{\text{a}} {\text{)}}^{\text{2}} {\text{≤ R}}^{\text{2}}$ By substituting the data of the points P₍ᵢⱼ₎ₛ₁, P₍ᵢⱼ₎ₛ₂, P₍ᵢⱼ₎ₛ₃ and P₍ᵢⱼ₎ₛ₄, points satisfying the foregoing equation are selected as those oriented within the circular projection. In the shown example in Figure 5, the points identified by hollow circles (o) are the points judged as being oriented within the circular projection.

Furthermore, with respect to those of the grid points P₍ᵢⱼ₎ₛ₁, P₍ᵢⱼ₎ₛ₂, P₍ᵢⱼ₎ₛ₃ and P₍ᵢⱼ₎ₛ₄ for which a judgement is made that they are oriented within the circular projection area, a z-coordinate position at which the centre of the ball end mill BM comes into contact with the machining point is derived. Among a plurality of z-coordinate position data of the contact points, the highest point is selected. The z-coordinate of the centre of the ball end mill BM is derived in the manner illustrated in Figure 6. As shown in Figure 6, the points oriented within the circular projection BM of the points P₍ᵢⱼ₎ₛ₁, P₍ᵢⱼ₎ₛ₂, P₍ᵢⱼ₎ₛ₃ and P₍ᵢⱼ₎ₛ₄ on the patches S_{(u,v)1} to S_{(u,v)4} are set as P_{IN}. For each point P_{IN}, x, y and z-coordinate position data are derived as xᵢ, yᵢ and zᵢ. The x, y and z-coordinate position data of the grid point GP (centre of the ball end mill BM) is then set as xₐ, yₐ and zₐ. Then, the equation of a sphere is established:${\text{(x}}_{\text{i}} {\text{- x}}_{\text{a}} {\text{)}}^{\text{2}} {\text{+ (y}}_{\text{i}} {\text{- y}}_{\text{a}} {\text{)}}^{\text{2}} {\text{+ (z}}_{\text{i}} {\text{- z}}_{\text{a}} {\text{)}}^{\text{2}} {\text{= R}}^{\text{2}}$ From the foregoing equation (17), the z-coordinate component zₐ can be derived by:$\text{za = zi +} \sqrt{{\text{R}}^{\text{2}} \left\{{\left(\text{xi - xa}\right)}^{2} \text{+} {\left(\text{yi - ya}\right)}^{2}\right\}}$ The z-coordinate position data zₐ thus derived is compared with the z-coordinate position data GZₘₐₓ of the grid point GP to set a new grid point z-coordinate data GZₘₐₓ which is the greater one of the two. Through this process, the grid point z-coordinate data GZₘₐₓ can be set at the maximum value of the z-coordinate data zₐ of the points.

As can be appreciated, the process at the steps SP₄ and SP₅ are repeated for deriving z-coordinate data GZₘₐₓ for all grid points GP.

Subsequently, at a step SP6, in order to prevent excess milling or curving, correction for the z-coordinate data GZₘₐₓ is performed with a predetermined correction value Z_{AD}. The corrected z-coordinate data are set as the grid point z-coordinate position data GZₘₐₓ. Subsequently, at a step SP₇, the process of generating the free surface data is finished.

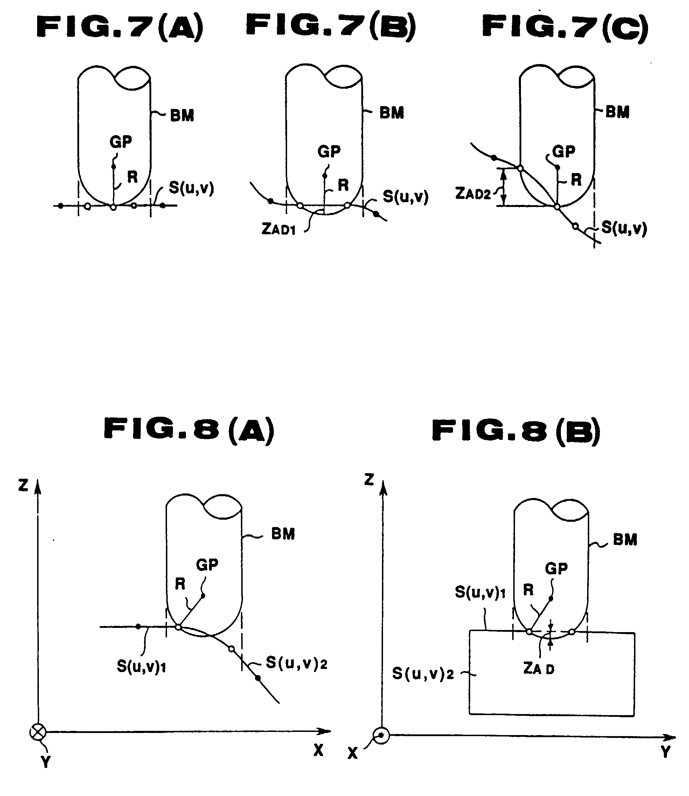

It should be noted that the correct value Z_{AD} is determined with respect to the condition of the points PIN on the patches S_{(u,v)1} to S_{(u, v)4}, about which the z-coordinate position data GZₘₐₓ are derived by the foregoing process. Namely, as shown in Figure 7(A), if the z-coordinate position data GZₘₐₓ are derived with respect to one point PIN on one plane patch S(u, v) defining the plane surface, the correction value can be derived from the following equation:${\text{Z}}_{\text{AD}} \text{= 0 + δ}$ where, again, δ is the value corresponding to the finishing margin. At this time, since the patch S(u, v) is a plane, the maximum value Zₘₐₓ and minimum value Zₘᵢₙ of the z-coordinate position are equal to each other. Therefore, the z-coordinate data GZₘₐₓ at the grid point GP can be expressed by:${\text{GZ}}_{\text{max}} {\text{= Z}}_{\text{max}} \text{+ R + δ}$ On the other hand, when the z-coordinate data GZₘₐₓ of the grid point GP is derived with respect to one point PIN on the patch S(u, v) defining curved surface, the correction value Z_{AD} may be derived by taking the surface configuration as illustrated in Figure 7(B) into account and is expressed by:${\text{Z}}_{\text{AD1}} {\text{= (R}}^{\text{2}} {\text{- ( 3/2 x R}}_{\text{ref}} {\text{)}}^{\text{2}} {\text{)}}^{\text{1/2}} \text{+ δ}$ or by taking the surface configuration as illustrated in Figure 7(C) into account to be expressed by:${\text{Z}}_{\text{AD2}} {\text{= R}}_{\text{ref}} \text{+ δ}$ Whichever is the greater of the values of Z_{AD1} and Z_{AD2} is taken as the correction value Z_{AD}.

When the z-coordinate data GZₘₐₓ of the grid point GP is common to more than one patch, for example S(u, v)₁ and S(u, v)₂, and when the point PIN, based on which the z-coordinate data GZₘₐₓ is derived, is oriented on one of the patches S(u, v)₁, the correction data A_{AD1} derived by equation (21) is used as the correction value Z_{AD}.

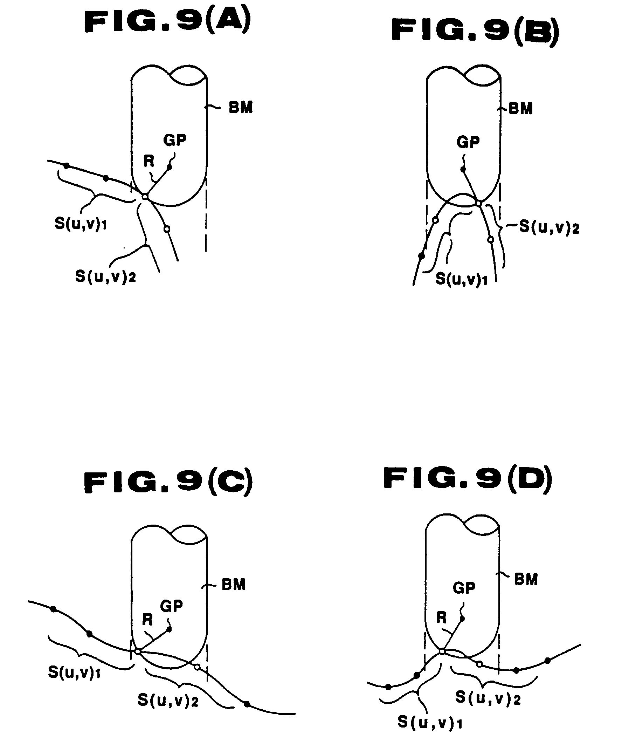

In addition, as shown in Figure 9(A), when the z-coordinate data GZₘₐₓ of the grid point GP corresponds to a minimum value Zₘᵢₙ of one of the other patches S(u, v)₁ and to a maximum value Zₘₐₓ of the other patch S(u, v)₂, the largest of the correction values Z_{AD1} and Z_{AD2} derived by equations (21) and (22) is selected as the correction value Z_{AD10} for the patch S(u, v)₁ and the correction value Z_{AD1} derived by equation (21) is used as the correction value Z_{AD20} for the other patch S(u, v)₂. Then, the greater of the correction values Z_{AD10} and Z_{AD20} is selected as the correction value Z_{AD}. Furthermore, various configurations of surfaces as shown in Figures 9(B) to 9(D) for example, can be treated by deriving respective correction values Z_{AD11} and Z_{AD21} by equations (21) and (22) and the largest one is selected for use as the correction value. Furthermore, if both patches are flat planes, the correction value Z_{AD} can be derived by equation (19) as set forth above.

As can be appreciated herefrom, the surface data generating process described does not require the establishment of an offset surface. Therefore, the surface condition which may cause discontinuity on an offset surface does not affect the generation of the machining data. Furthermore, since the segments formed by dividing the respective patches are formed so that the size thereof is smaller than a given value determined according to the size of the mill to be used, one or more patches oriented on the projection of the mill is selected, and the maximum value of the z-coordinate value at the contact point where the mill contacts is established, it becomes possible to generate free surface machining data for rough machining without generating the offset surface.

Although the embodiment described divides the parameters of the respective patches and compares the distance between the adjacent grid points with a reference value corresponding to the radius of the ball end mill, the reference value may be set at any value as long as it is smaller than the radius of the ball end mill. By setting the reference value at a smaller value than the radius of the ball end mill, the accuracy in the z-coordinate values can be enhanced to prevent the occurrence of any machining error.

Furthermore, although the embodiment described is exemplified by the process for generating the machining data of a frame space defined by a plurality of quadrilateral patches each of which is expressed by a tertiary Bezier formula, it is possible to employ patches defined by biquadratic or higher degree Bezier formulae. Furthermore, the configuration of the patch is not necessarily limited to the quadrilateral but can be triangular or any appropriate configuration. Furthermore, the patch may also be expressed by B-spline formula or Furgason's formula.

## Claims

1. A method of generating data defining the machining depth along a tool path for a numerically controlled machine (14) of the type having a machining tool of a known configuration, using data defining a three-dimensionally curved surface, the method comprising the steps of:
(a) dividing the three-dimensionally curved surface into a plurality of patches;
(b) then sub-dividing each of the patches to establish a plurality of grid points;
(c) comparing the distance between adjacent grid points with a given value which is derived in relation to the size of the machining tool; and
(d) repeating steps (b) and (c) when the distance as compared at step (c) is greater than the given value;
(e) then selecting patches located in a section area of the machining tool; and
(f) selecting the grid points of the patches determined in step (e) which are inside of the section area of the machining tool;
(g) then calculating for each selected grid point the maximum height of the centre of the machining tool for the machining tool to contact said selected grid point; and
(h) adding a predetermined correction value to the maximum height for determining the height position of machining tool in the tool path.

2. A method according to claim 1 wherein the predetermined correction value (Z_{AD}) is derived from the following equations:${\text{Z}}_{\text{AD}} \text{= δ}$${\text{Z}}_{\text{AD1}} {\text{= (R}}^{\text{2}} {\text{- (√3/2 x R}}_{\text{ref}} {\text{)}}^{\text{2}} {\text{)}}^{\text{1/2}} \text{+ δ}$${\text{Z}}_{\text{AD2}} {\text{= R}}_{\text{ref}} \text{+ δ}$ where
R is the radius of the machining tool;
R_{ref} is a reference value (R_{ref} ≤ R); and
δ is a value corresponding to a finishing margin.

3. A method according to claim 1 wherein grid points satisfying the following equation are selected as grid points oriented within the the following equation are selected as grid points oriented within the section area of the machining tool:${\text{(x}}_{\text{i}} {\text{+ x}}_{\text{a}} {\text{)}}^{\text{2}} {\text{+ (y}}_{\text{i}} {\text{- y}}_{\text{a}} {\text{)}}^{\text{2}} {\text{≤ R}}^{\text{2}}$ where
xᵢ and yᵢ are x and y-coordinate components of a point within the section area;
xₐ, yₐ are x and y-coordinate components of the grid point aligned with the centre of the machining tool; and
R is the radius of the machining tool.

## Patentansprüche

1. Verfahren zur Erzeugung von Daten, die die Bearbeitungstiefe längs eines Werkzeugweges für eine numerisch gesteuerte Maschine (14) des Types festlegen, der ein Bearbeitungswerkzeug einer bekannten Form aufweist, unter Verwendung von Daten, die eine dreidimensional gekrümmte Fläche festlegen, wobei das Verfahren die folgenden Schritte aufweist:
(a) Aufteilen der dreidimensional gekrümmten Fläche in mehrere Flächenelemente (Patches);
(b) darauf Unterteilung von jedem der Flächenelemente zur Schaffung von mehreren Gitterpunkten;
(c) Vergleichen des Abstandes zwischen benachbarten Gitterpunkten mit einem gegebenen Wert, der abhängig von der Größe des Bearbeitungswerkzeuges ermittelt wird; und
(d) Wiederholung der Schritte (b) und (c), wenn der Abstand bei dem Vergleichen bei Schritt (c) größer als der gegebene Wert ist;
(e) daraufhin Wählen der Flächenelemente, die in einem Flächenabschnitt des Bearbeitungswerkzeuges liegen; und
(f) Wählen der Gitterpunkte der in Schritt (e) festgelegten Flächenelemente, die innerhalb des Flächenabschnittes des Bearbeitungswerkzeuges liegen;
(g) daraufhin Berechnen für jeden gewählten Gitterpunkt der Maximalhöhe des Mittelpunktes des Bearbeitungswerkzeuges für das zur Berührung des gewählten Gitterpunktes vorgesehene Bearbeitungswerkzeug; und
(h) Addieren eines vorbestimmten Korrekturwertes zu der Maximalhöhe zur Festlegung der Höhenposition des Bearbeitungswerkzeuges in dem Werkzeugweg.

2. Verfahren nach Anspruch 1,
bei dem der vorbestimmte Korrekturwert (Z_{AD}) aus den folgenden Gleichungen abgeleitet wird:${\text{Z}}_{\text{AD}} \text{= δ}$${\text{Z}}_{\text{AD1}} {\text{= (R}}^{\text{2}} {\text{- (√3/2 x R}}_{\text{ref}} {\text{)}}^{\text{2}} {\text{)}}^{\text{1/2}} \text{+ δ}$${\text{Z}}_{\text{AD2}} {\text{= R}}_{\text{ref}} \text{- δ}$ wobei
R der Radius der Wert des Bearbeitungswerkzeuges;
R_{ref} ein Referenzwert (R_{ref} ≤ R); und
δ ein Wert ist, der dem Fertigbearbeitungsrand entspricht.

3. Verfahren nach Anspruch 1,
bei dem die Gitterpunkte, die die folgende Gleichung erfüllen, als Gitterpunkte gewählt werden, die innerhalb des Flächenbereiches des Bearbeitungswerkzeuges liegen:${\text{(x}}_{\text{i}} {\text{- x}}_{\text{a}} {\text{)}}^{\text{2}} {\text{+ (y}}_{\text{i}} {\text{- y}}_{\text{a}} {\text{)}}^{\text{2}} {\text{≤ R}}^{\text{2}}$ wobei
xᵢ und yᵢ die x- bzw. y-Koordinatenkomponenten eines Punktes innerhalb des Flächenabschnittes sind;
xₐ, yₐ die x- bzw. y-Koordinatenkomponenten des Gitterpunktes sind, der in der Verlängerung des Mittelpunktes des Bearbeitungswerkzeuges liegt; und
R der Radius des Bearbeitungswerkzeuges ist.

## Revendications

1. Procédé de génération de données définissant la profondeur d'usinage le long d'une trajectoire d'outil pour une machine à commande numérique (14) du type ayant un outil d'usinage d'une configuration connue, utilisant des données définissant une surface tridimensionnellement incurvée, le procédé comprenant les étapes de :
(a)division de la surface incurvée tridimensionnellement en une pluralité de facettes ;
(b)ensuite subdivision de chacune des facettes pour établir une pluralité de points de grille ;
(c)comparaison de la distance entre les points de grille adjacents à une valeur donnée qui est dérivée par rapport à la dimension de l'outil d'usinage ; et
(d)répétition des étapes (b) et (c) lorsque la distance comparée à l'étape (c) est plus grande que la valeur donnée ;
(e)puis sélection des facettes situées dans une zone de section de l'outil d'usinage ; et
(f)sélection des points de grille des facettes déterminées à l'étape (e) qui sont à l'intérieur de la zone de section de l'outil d'usinage ;
(g)puis calcul pour chaque point de grille sélectionné de la hauteur maximale du centre de l'outil d'usinage pour que l'outil d'usinage soit en contact avec ledit point de grille sélectionné ; et
(h)addition d'une valeur de correction prédéterminée à la hauteur maximale pour déterminer la position de hauteur de l'outil d'usinage dans la trajectoire d'outil.

2. Procédé selon la revendication 1 dans lequel la valeur de correction prédéterminée (Z_{AD}) est dérivée à partir des équations suivantes :${\text{Z}}_{\text{AD}} \text{= δ}$${\text{Z}}_{\text{AD1}} {\text{= (R}}^{\text{2}} {\text{- (3 / 2 x R}}_{\text{ref}} {\text{)}}^{\text{2}} {\text{)}}^{\text{1/2}} \text{+ δ}$${\text{Z}}_{\text{AD2}} {\text{= R}}_{\text{ref}} \text{+ δ}$ où
R est le rayon de l'outil d'usinage ;
R_{ref} est une valeur de référence (R_{ref} ≤ R) ; et
δ est une valeur correspondant à une marge de finition.

3. Procédé selon la revendication 1 dans lequel des points de grille satisfaisant l'équation suivante sont sélectionnés comme points de grille orientés dans la zone de section de l'outil d'usinage :${\text{(x}}_{\text{i}} {\text{- x}}_{\text{a}} {\text{)}}^{\text{2}} {\text{+ (y}}_{\text{i}} {\text{- y}}_{\text{a}} {\text{)}}^{\text{2}} {\text{≤ R}}^{\text{2}}$ où
xᵢ et yᵢ sont des composantes de coordonnées x et y d'un point dans la zone de section ;
xₐ, yₐ sont des composantes de coordonnée x et y du point de grille aligné avec le centre de l'outil d'usinage ; et
R est le rayon de l'outil d'usinage.
